# DEMANDE DE BREVET EUROPEEN

(11) **EP 1 816 795 A1**
(43) Date de publication de la demande: **08.08.2007**
(21) Numéro de dépôt: 07100989.8
(22) Date de dépôt: 23.01.2007
(51) Int. Cl.: H04L 12/28

(54) **Dispositif de radiocommunication à moyens d'accès conformes aux technologies GAN et 3SPP-WLAN interworking, et controleur de réseau d'accès correspondant**

(30) Priorité: 02.02.2006 FR 0650379
(71) Demandeur: Alcatel Lucent, 75008 Paris (FR)
(72) Inventeur: El Mghazli, Yacine, 94110 Arcueil (FR); Fiat, Lionel, 92380 Garches (FR); Desorbay, Eric, 44750 Campbon (FR)
(74) Mandataire: El Manouni, Josiane

(57) **Abrégé**

L'invention concerne un dispositif de radiocommunication (700) comprenant :
- pour des services circuits, des premiers moyens d'accès, permettant d'accéder à un réseau mobile via un premier réseau d'accès compris dans un réseau local sans fil,
- pour des services paquets, des deuxièmes moyens d'accès (70), permettant d'accéder au réseau mobile via le premier réseau d'accès.

Selon l'invention, les premiers moyens d'accès sont conformes à la technologie « GAN » et les deuxièmes moyens d'accès sont conformes à la technologie « 3GPP-WLAN Interworking ». Les technologies sont définies dans les normes 3GPP.

## Description

### 1. DOMAINE DE L'INVENTION

Le domaine de l'invention est celui de l'interfonctionnement (ou « Interworking » en anglais) entre réseaux, et plus précisément de l'interfonctionnement (2G/3G)/WLAN, c'est-à-dire de l'interfonctionnement entre au moins un réseau local sans fil (WLAN, pour « Wireless Local Area Network ») et un réseau mobile 2G/3G.

Par réseau mobile 2G/3G, on entend un réseau mobile de 2^{ème} génération et 3^{ème} génération, tel que par exemple un réseau GSM/GPRS (« Global System for Mobile Communication / General Packet Radio Service »), un réseau UMTS (« Universal Mobile Télécommunication System »), un réseau CDMA2000 (« Code Division Multiple Access 2000 »), etc.

Un tel interfonctionnement (2G/3G)/WLAN vise à permettre aux technologies d'accès IP (« Internet Protocol ») sans fil (par exemple selon la norme WiFi ou WiMAX) de fonctionner avec des infrastructures de coeur de réseau mobile 2G/3G, afin de permettre à un utilisateur WLAN d'accéder à des services circuits (CS, pour « Circuit-Switched services ») et paquets (PS, pour « Packet-Switched services ») via des réseaux d'accès IP sans fil.

Le problème technique à résoudre est la gestion des accès aux services circuits et paquets. Plus précisément, il s'agit de permettre à un utilisateur WLAN d'accéder, au moyen d'un terminal de radiocommunication (aussi appelé par la suite dispositif de radiocommunication) (par exemple, un radiotéléphone, un PDA (« Personal Digital Assistant »), ou encore un ordinateur portable), d'une part à des services paquets haut débit (par exemple, des services multimédias du type IMS («IP Multimedia Subsystem ») avec des accès sans fils hétérogènes, et d'autre part à des services circuits (par exemple, des services de transport de voix).

### 2. ART ANTÉRIEUR

Les normes 3GPP (« 3^{rd} Generation Patrnership Project ») définissent plusieurs technologies pour l'accès à un réseau mobile 3G via un réseau d'accès IP.

On discute ci-après les inconvénients de l'art antérieur à travers les cas particuliers des technologies d'accès « GAN » (pour « Generic Access Network ») (généralement appelée «UMA» pour « Unlicensed Mobile Access ») et « 3GPP-WLAN Interworking » (notée « 1-WLAN » dans la suite de ce document).

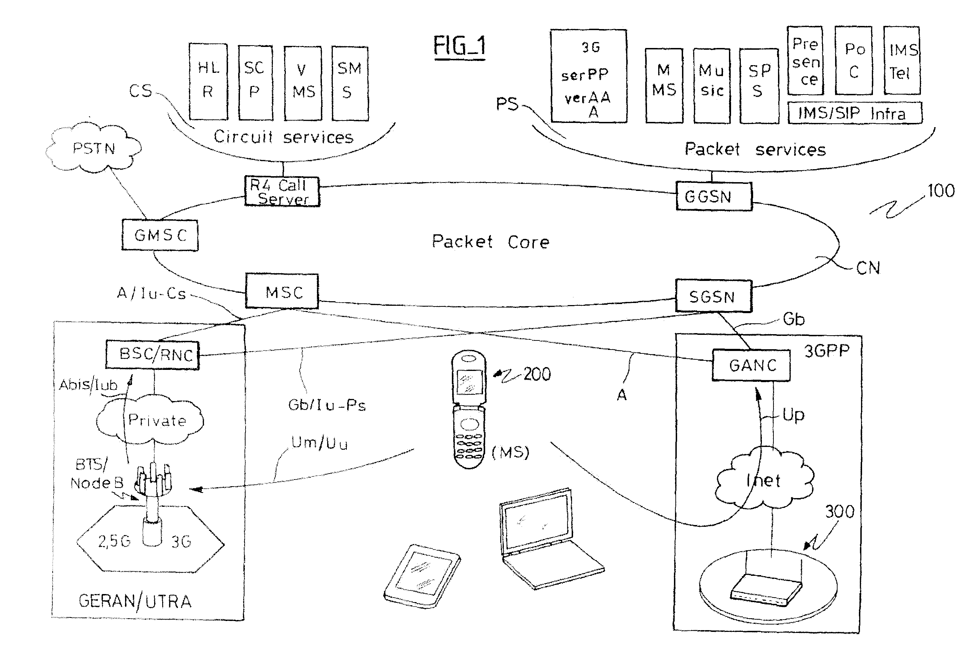

On va décrire maintenant en relation avec les **figures 1 à 3,** les architectures d'un réseau 100 et d'un terminal de radiocommunication 200 (aussi appelé par la suite station mobile, «MS » pour « Mobile Station ») selon la technologie « GAN ».

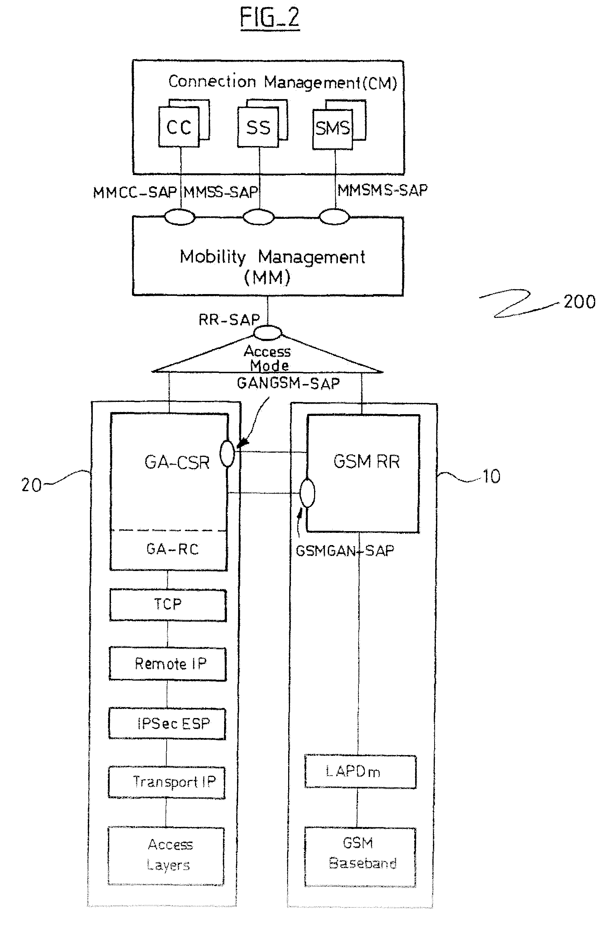

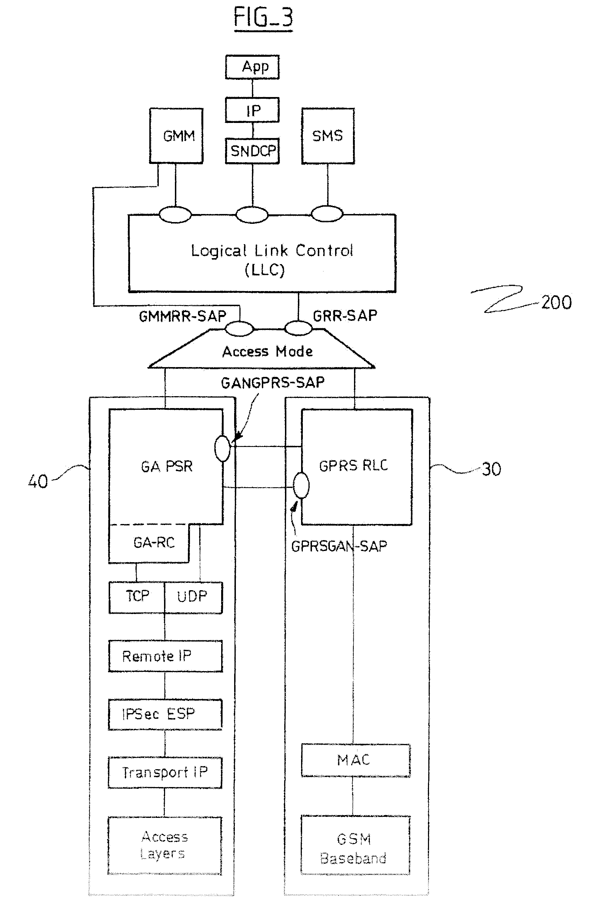

Comme illustré par la figure 1, la technologie «GAN» permet à une station mobile (MS) 200 :
- d'accéder à un ou plusieurs services 3GPP à commutation de circuits (« 3GPP CS services » en anglais) offerts par un réseau coeur CN (« Core Network » en anglais) (coeur de réseau 2G/3G):
   o via un contrôleur de coeur de réseau MSC (pour « Mobile Switching Center ») relié à un contrôleur de réseau radio BSC/RNC (« Base Station Controller /Radio Network Controller» en anglais), appartenant à un réseau d'accès de type GERAN/UTRAN (pour «GSM Edge Radio Access Network / UMTS Terrestrian Radio Access Network »). Comme illustré par la figure 2, la station mobile (MS) 200 comprend des moyens d'accès 10 aux services circuits via le réseau GERAN/UTRAN (voir le paragraphe 6.1.1.2 du document de normalisation 3GPP TS 43.318 pour une description détaillée de ces moyens d'accès). En référence à la figure 1, la station mobile (MS) 200 est reliée à une station de base BTS/Node B (pour « Base Transceiver Station » en anglais), via une interface Um/Uu. La station de base BTS/Node B est reliée au contrôleur de réseau radio BSC/RNC, via une interface Abis/lub. Le contrôleur de réseau radio BSC/RNC est relié au contrôleur de coeur de réseau MSC, via une interface A/Iu-Cs ; ou
   o via le contrôleur de coeur de réseau MSC relié à un contrôleur de réseau d'accès générique GANC (pour « GAN Controller»), appartenant à un réseau d'accès de type IP (par exemple, du type Internet). Comme illustré par la figure 2, la station mobile (MS) 200 comprend des moyens d'accès 20 aux services circuits via le réseau d'accès IP (voir le paragraphe 6.1.1.2 du document de normalisation 3GPP TS 43.318 pour une description détaillée de ces moyens d'accès). En référence à la figure 1, la station mobile (MS) 200 communique, par l'intermédiaire d'un relais radio 300, avec le contrôleur de réseau d'accès GANC, via une interface Up. Le contrôleur de réseau d'accès GANC est relié au contrôleur de coeur de réseau MSC, via une interface A;
- d'accéder à un ou plusieurs services 3GPP à commutation de paquets (« 3GPP PS services » en anglais) offerts par le réseau coeur CN:
   o via un noeud SGSN (pour « Serving GPRS Support Node ») relié au contrôleur de réseau radio BSC/RNC, appartenant au réseau d'accès GERAN/UTRAN. Comme illustré par la figure 3, la station mobile (MS) 200 comprend des moyens d'accès 30 aux services paquets via le réseau GERAN/UTRAN (voir le paragraphe 6.2.2 du document de normalisation 3GPP TS 43.318 pour une description détaillée de ces moyens d'accès). En référence à la figure 1, la station mobile (MS) 200 est reliée à la station de base BTS/Node B, via l'interface Um/Uu. La station de base BTS/Node B est reliée au contrôleur de réseau radio BSC/RNC, via l'interface Abis/Iub. Le contrôleur de réseau radio BSC/RNC est relié au noeud SGSN, via une interface Gb/lu-Ps ; ou
   o via le noeud SGSN relié au contrôleur de réseau d'accès GANC, appartenant au réseau d'accès IP. Comme illustré par la figure 3, la station mobile (MS) 200 comprend des moyens d'accès 40 aux services paquets via le réseau d'accès IP (voir le paragraphe 6.2.2 du document de normalisation 3GPP TS 43.318 pour une description détaillée de ces moyens d'accès). En référence à la figure 1, la station mobile (MS) 200 communique, par l'intermédiaire du relais radio 300, avec le contrôleur de réseau d'accès GANC, via l'interface Up.
   Le contrôleur de réseau d'accès GANC est relié au noeud SGSN, via une interface Gb.

L'avantage de la technologie « GAN » est qu'elle permet de maintenir une continuité de service à travers les réseaux d'accès radio WLAN et 2G/3G, pour les services de transport de voix et de données bas débit.

Cependant, pour les services de transport de données haut débit, elle présente un certain nombre d'inconvénients. En effet, l'efficacité de cette technologie est limitée par le fait que le noeud SGSN, qui est relié au réseau d'accès GANC via l'interface Gb, ne permet pas d'effectuer le transfert (« handover » en anglais) d'une communication temps réel (type voix) en cours depuis un réseau WLAN vers un réseau 2G/3G, sans interrompre cette communication.

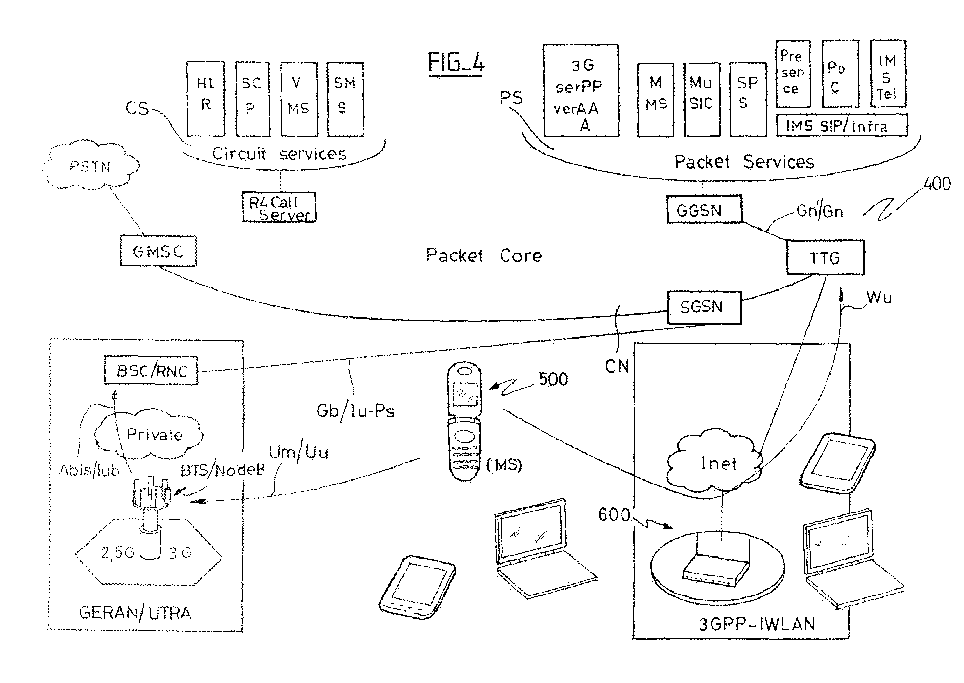

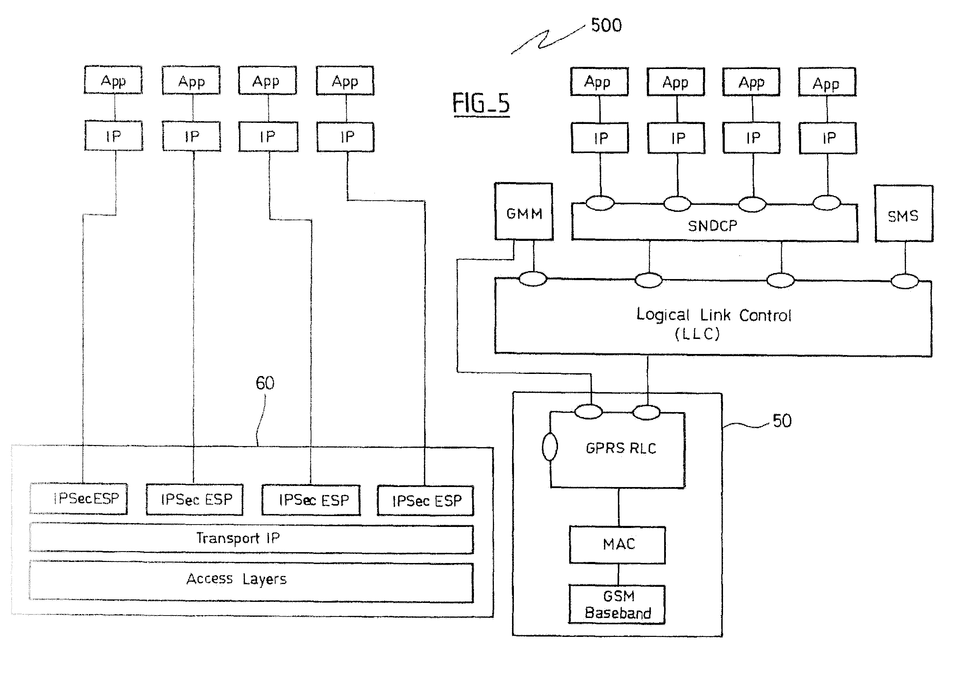

On décrit désormais en relation avec les **figures 4 et 5,** les architectures d'un réseau 400 et d'une station mobile 500 selon la technologie « I-WLAN ».

Comme illustré par la figure 4, la technologie « I-WLAN » permet à une station mobile (MS) 500 d'accéder à un ou plusieurs services 3GPP à commutation de paquets (« 3GPP PS services » en anglais) offerts par un réseau coeur CN (coeur de réseau 2G/3G) :
- via un noeud SGSN (pour « Serving GPRS Support Node ») relié à un contrôleur de réseau radio BSC/RNC, appartenant à un réseau d'accès GERAN/UTRAN. Comme illustré par la figure 5, la station mobile (MS) 500 comprend des moyens d'accès 50 aux services paquets via le réseau GERAN/UTRAN (voir le document de normalisation 3GPP TS 23.060). En référence à la figure 4, la station mobile (MS) 500 est reliée à une station de base BTS/Node B, via une interface Um/Uu. La station de base BTS/Node B est reliée au contrôleur de réseau radio BSC/RNC, via une interface Abis/lub. Le contrôleur de réseau radio BSC/RNC est relié au noeud SGSN, via une interface Gb/lu-Ps ; ou
- via un noeud GGSN (pour « Gateway GPRS Support Node ») relié à une passerelle TTG (pour « Tunnel Termination Gateway »), le noeud GGSN et la passerelle TTG appartenant tous deux au réseau coeur CN. Comme illustré par la figure 5, la station mobile (MS) 500 comprend des moyens d'accès 60 aux services paquets via la passerelle TTG du réseau coeur CN (voir le paragraphe G.2.1 du document de normalisation 3GPP TS 23.234). En référence à la figure 4, la station mobile (MS) 500 communique, par l'intermédiaire d'un relais radio 600, avec la passerelle TTG, via une interface Wu. La passerelle TTG est reliée au noeud GGSN, via une interface Gn'/Gn.

Bien que la technologie « 1-WLAN » ait représenté un progrès important dans le mécanisme d'accès aux services paquets haut débit, cette technologie présente néanmoins les désavantages de ne pas permettre à un utilisateur WLAN d'accéder à des services circuits et de ne pas maintenir une continuité de service à travers les réseaux d'accès radio WLAN et 2G/3G.

Il existe donc un besoin d'optimisation des architectures d'accès aux services circuits et paquets, tant du côté de la station mobile que du réseau, notamment pour permettre à un utilisateur WLAN de passer d'un réseau d'accès IP à un réseau mobile 2G/3G, et vice-versa, tout en conservant une continuité de service, et ce quel que soit le type de service accédé.

### 3. OBJECTIFS DE L'INVENTION

L'invention a notamment pour objectif de pallier ces inconvénients de l'art antérieur.

Plus précisément, l'un des objectifs de la présente invention, dans au moins un mode de réalisation, est de fournir une technique d'accès aux services 3GPP qui soit simple à mettre en oeuvre et efficace, notamment en terme de rapidité d'accès, c'est-à-dire permettant un échange de données à haut débit entre une station mobile et un coeur de réseau 3G.

L'invention a également pour objectif de fournir une telle technique d'accès qui, dans au moins un mode de réalisation, soit notamment bien adaptée aux services 3GPP à commutation de paquets.

L'invention a aussi pour objectif de fournir une telle technique d'accès qui, dans au moins un mode de réalisation, soit notamment bien adaptée aux services 3GPP à commutation de circuits.

L'invention a également pour objectif de fournir une telle technique d'accès qui, dans un mode de réalisation particulier, soit notamment bien adaptée à tous les réseaux 2G/3G existants.

Un objectif complémentaire de l'invention, dans au moins un mode de réalisation, est de fournir une telle technique d'accès qui ne conduise pas à une modification lourde ou complexe des stations mobiles et des réseaux d'accès actuels.

### 4. EXPOSÉ DE L'INVENTION

Ces objectifs, ainsi que d'autres qui apparaîtront par la suite, sont atteints à l'aide d'un dispositif de radiocommunication comprenant :
- pour des services circuits, des premiers moyens d'accès, permettant d'accéder à un réseau mobile via un premier réseau d'accès compris dans un réseau local sans fil,
- pour des services paquets, des deuxièmes moyens d'accès, permettant d'accéder audit réseau mobile via ledit premier réseau d'accès.

Selon l'invention, les premiers moyens d'accès sont conformes à la technologie « GAN » et les deuxièmes moyens d'accès sont conformes à la technologie « 3GPP-WLAN Interworking ». Les technologies sont définies dans les normes 3GPP.

Ainsi, l'invention repose sur une approche tout à fait nouvelle et inventive pour l'accès d'une station mobile (aussi appelée dispositif de radiocommunication) aux services 3GPP d'un coeur de réseau 2G/3G. En effet, l'invention propose d'implémenter dans une même station mobile des moyens d'accès selon les technologies « GAN » (c'est-à-dire « UMA-GS ») et «I-WLAN » (c'est-à-dire «3GPP-WLAN Interworking »), permettant d'accéder à des services circuits et paquets, respectivement.

En d'autres termes, l'invention propose une technologie hybride, qui associe une gestion de continuité de service pour les services circuits selon la technologie « GAN » à une gestion d'accès de service paquet haut débit selon la technologie « I-WLAN ».

La présente invention couvre également le cas d'une station mobile, dans laquelle est mise en oeuvre une technologie « GAN » étendue (« UMA extended solution ») (à la place de la technologie « GAN » classique), utilisant des interfaces de type Iu-CS/Iu-PS (à la place des interfaces A/Gb de la technologie « GAN » classique).

Selon un aspect avantageux de l'invention, le dispositif comprend en outre :
- pour lesdits services circuits, des troisièmes moyens d'accès, permettant d'accéder audit réseau mobile via un deuxième réseau d'accès compris dans ledit réseau mobile ; et
- pour lesdits services paquets, des quatrièmes moyens d'accès, permettant d'accéder audit réseau mobile via ledit deuxième réseau d'accès compris dans ledit réseau mobile.

Les troisièmes moyens d'accès sont conformes à la technologie « GAN » et les quatrièmes moyens d'accès sont conformes à la technologie « 3GPP-WLAN Interworking ».

Dans un mode de réalisation préférentiel de l'invention, le dispositif comprend en outre, pour lesdits services paquets, des moyens de répartition permettant d'affecter des flux PDP auxdits deuxièmes ou quatrièmes moyens d'accès.

Avantageusement, lesdits deuxièmes moyens d'accès comprennent des moyens de contrôle permettant de :
- gérer l'établissement d'un tunnel IPsec pour chaque flux PDP; et
- effectuer une mise en correspondance de chaque flux PDP avec un tunnel IPsec.

L'invention concerne également un contrôleur de réseau d'accès, permettant à un dispositif de radiocommunication :
- pour des services circuits, d'accéder à un réseau mobile via un premier réseau d'accès compris dans un réseau local sans fil,
- pour des services paquets, d'accéder audit réseau mobile via ledit premier réseau d'accès.

Selon l'invention, ledit contrôleur de réseau d'accès comprend :
- un bloc GANC-CS qui correspond à la partie relative aux services circuits d'un contrôleur GANC conforme à la technologie « GAN », permettant de gérer des flux pour les services circuits ;
- une passerelle TTG conforme à la technologie « 3GPP-WLAN Interworking », permettant de gérer des flux pour les services paquets, lesdites technologies étant définies dans les normes 3GPP ; et
- des moyens de répartition permettant d'affecter chaque flux audit bloc GANC-CS ou à ladite passerelle TTG.

Ainsi, l'invention s'appuie sur l'utilisation d'un contrôleur de réseau IP hybride (« Hybrid-WNC » pour « Hybrid Wireless IP Network Controller »), dans lequel sont implémentés un contrôleur de réseau d'accès GANC-CS permettant à une station mobile d'accéder à des services circuits, et une passerelle TTG permettant à la station mobile d'accéder à des services paquets.

Il est à noter que l'invention permet avantageusement de réutiliser des infrastructures existantes de coeur de réseau 2G/3G, notamment, mais non exclusivement, un contrôleur de coeur de réseau MSC, un noeud GGSN,...

Par ailleurs, il est important de noter que des fonctionnalités supplémentaires peuvent être réalisées par la passerelle TTG, notamment, mais non exclusivement, pour offrir une mobilité entre le réseau radio 2G/3G et le réseau WLAN.

De façon avantageuse, le contrôleur de réseau d'accès comprend en outre une unique passerelle de sécurité SEGW placée en amont dudit bloc GANC-CS et de ladite passerelle TTG, côté dispositif de radiocommunication.

De façon préférentielle, ladite passerelle de sécurité SEGW comprend lesdits moyens de répartition.

### 5. LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif et des dessins annexés, parmi lesquels :
- les figures 1 à 5, déjà commentées en relation avec l'art antérieur, présentent :
   o figure 1: l'architecture d'un réseau de communication selon la technologie « GAN » ;
   o figure 2: l'architecture d'une station mobile selon la technologie « GAN », pour des services circuits;
   o figure 3 : l'architecture de la station mobile de la figure 2, pour des services paquets;
   o figure 4 : l'architecture d'un réseau de communication selon la technologie « 1-WLAN »;
   o figure 5: l'architecture d'une station mobile selon la technologie « 1-WLAN », pour des services paquets;
- la figure 6 présente le schéma d'un dispositif de radiocommunication selon un mode de réalisation préférentiel de l'invention, pour des services paquets;
- la figure 7 présente le schéma d'un mode de réalisation particulier d'un contrôleur de réseau d'accès selon l'invention, pour un accès à des services paquets ; et
- la figure 8 présente un exemple de diagramme d'échange de messages entre différentes entités du réseau, dans le cas de l'accès aux services paquets illustré sur la figure 7.

### 6. DESCRIPTION D'UN MODE DE RÉALISATION PARTICULIER

Par souci de simplification de la description, on se limitera, dans toute la suite de ce document, à décrire les moyens d'accès aux services paquets d'un dispositif de radiocommunication fonctionnant selon les technologies « GAN » et «I-WLAN ». Les moyens d'accès aux services circuits d'un tel dispositif sont présentés en détail dans le document de normalisation 3GPP TS 43.318,

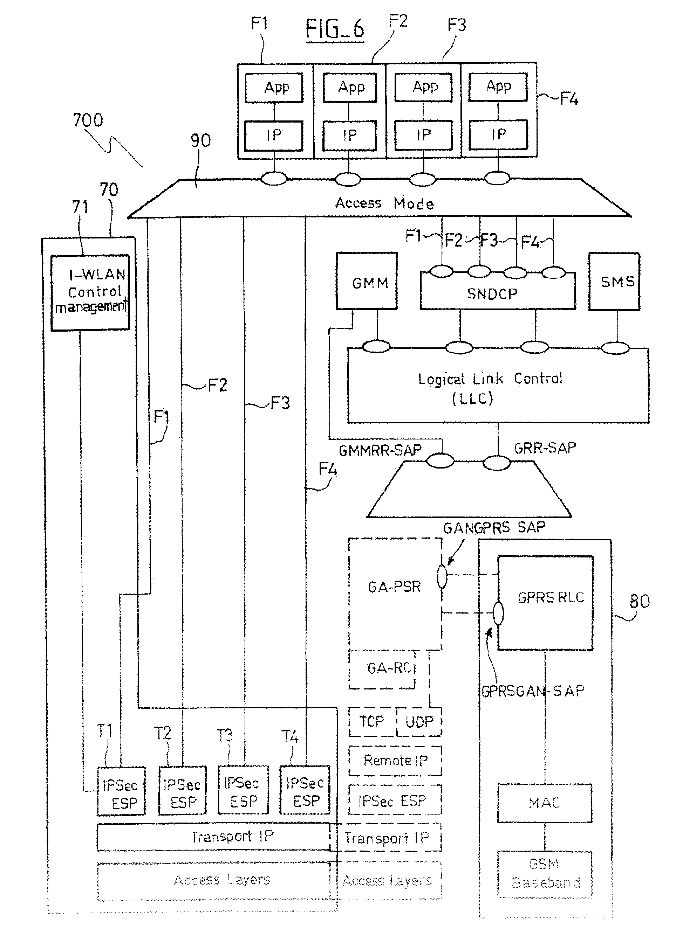

La **figure 6** illustre de façon schématique un mode de réalisation particulier d'un dispositif de radiocommunication 700 (aussi appelé par la suite station mobile) selon l'invention, permettant de mettre en oeuvre la technologie « 1-WLAN » pour l'accès à des services paquets, via des réseaux d'accès de type GERAN/UTRAN et IP.

Dans ce mode de réalisation, la station mobile 700 selon l'invention comprend, pour des services paquets :
- des moyens de répartition 90 de flux PDP (« Packet Data Protocol ») spécifiques à l'invention ;
- des premiers moyens d'accès 70 spécifiques à l'invention, qui sont conformes la technologie « I-WLAN » et qui permettent d'accéder à un réseau mobile 2G/3G via un réseau d'accès IP ; et
- des seconds moyens d'accès 80 de type classiques en soi, qui sont conformes à la technologie « I-WLAN » et qui permettent d'accéder au réseau mobile 2G/3G via un réseau d'accès GERAN/UTRAN.

Dans la suite de ce document, on décrit le cas particulier d'une station mobile fonctionnant avec quatre flux PDP. L'Homme du Métier étendra sans difficulté cet enseignement à une station mobile fonctionnant avec un nombre supérieur ou inférieur de flux PDP.

Les moyens de répartition 90 reçoivent en entrée des flux PDP F1, F2, F3 et F4, correspondant chacun à une instanciation des couches « App/IP » (« Application/Internet Protocol »), et dirigent en sortie chaque flux PDP vers les premiers 70 ou seconds 80 moyens d'accès au réseau mobile 2G/3G. En d'autres termes, les moyens de répartition 90 gèrent la correspondance (« mapping » en anglais) du trafic de données (flux PDP) suivant l'accès radio utilisé, de sorte que:
- si l'accès radio utilisé est un accès radio WLAN, par exemple du type WiFi, alors les flux PDP sont affectés aux premiers moyens d'accès 70 ;
- en revanche, si l'accès radio utilisé est un accès radio 2G/3G, par exemple du type GSM, alors les flux PDP sont affectés aux seconds moyens d'accès 80.

Comme on le verra dans la suite de la description, lorsque les flux PDP sont transmis/reçus via l'accès radio WLAN, chaque flux PDP est associé à un tunnel Ipsec.

Dans le mode de réalisation illustré, les premiers moyens d'accès 70 comprennent des moyens de contrôle 71 permettant d'une part de gérer l'établissement d'un tunnel IPsec T1, T2, T3 et T4 pour chaque flux PDP F1, F2, F3 et F4, et d'autre part d'effectuer une mise en correspondance de chaque flux PDP avec un tunnel Ipsec.

Ainsi, la station mobile 700 de l'invention est notamment bien adaptée à un service paquet multi-accès radio et permet à un utilisateur WLAN d'accéder à des services 3GPP d'un réseau mobile 2G/3G avec la meilleure connexion disponible.

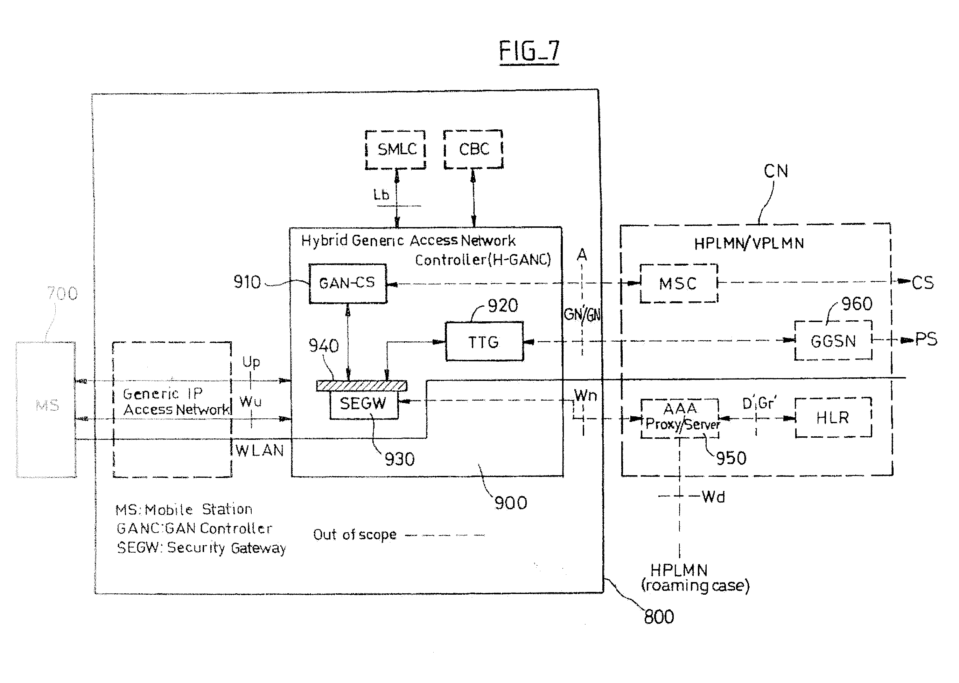

On décrit désormais en relation avec la **figure 7,** un réseau d'accès IP 800 mettant en oeuvre un contrôleur de réseau d'accès 900 selon un mode de réalisation préférentiel de l'invention.

Dans le présent mode de réalisation, le contrôleur de réseau d'accès 900 comprend :
- un module GANC-CS (910) qui correspond à la partie relative aux services circuits d'un contrôleur GANC (voir le paragraphe 4 du document de normalisation 3GPP TS 43.318) conforme à la technologie «GAN ». Ce module GANC-CS (910) permet de gérer des flux pour les services circuits ;
- une passerelle TTG (920) (voir l'annexe F du document de normalisation 3GPP TS 23.234) conforme à la technologie « I-WLAN », permettant de gérer des flux pour les services paquets ; et
- une passerelle de sécurité SEGW (« Security Gateway ») (930) placée en amont du module GANC-CS (910) et de la passerelle TTG (920), côté station mobile 700.

Dans ce mode de réalisation, la passerelle de sécurité SEGW (930) comprend des moyens de répartition 940 permettant d'affecter chaque flux PDP au module GANC-CS (910) ou à la passerelle TTG (920).

Comme illustré par la figure 7, pour des services paquets, la station mobile 700 (qui met en oeuvre les premiers moyens d'accès 70 précités) communique avec la passerelle de sécurité SEGW (930), via une interface Wu. La passerelle de sécurité SEGW (930) transmet/reçoit des flux de données via la passerelle TTG (920). La passerelle TTG (920) est reliée à un noeud GGSN (960), via une interface Gn'/Gn.

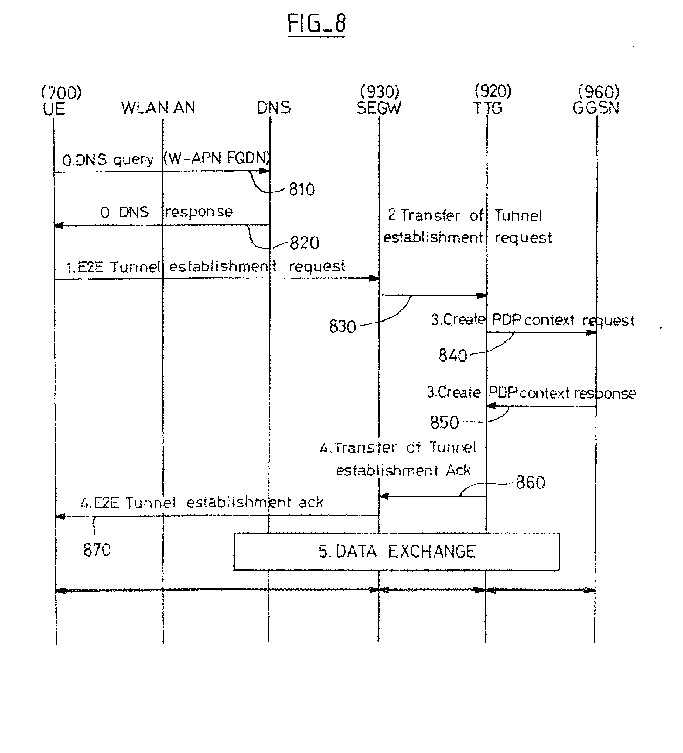

On présente maintenant, en relation avec la **figure 8**, un exemple de diagramme d'échange de messages entre différentes entités du réseau pour effectuer l'accès aux services paquets illustré sur la figure 7.

Les entités concernées, qui ont déjà été présentées ci-dessus, sont les suivantes : la station mobile 700, le réseau WLAN, la passerelle de sécurité SEGW (930), la passerelle TTG (920) et le noeud GGSN (960).

On suppose que la station mobile 700 s'est authentifiée au préalable auprès d'un serveur AAA 950 (en référence à la figure 7) (« Authentication, Authorization & Accounting »), compris dans le réseau coeur CN.

Dans un premier temps, la station mobile 700 établit une connexion avec le réseau WLAN.

Puis, la station mobile 700 effectue une demande DNS (pour « Domain Name System ») 810, afin de retrouver l'adresse IP de la passerelle de sécurité SEGW (930).

Après qu'elle a obtenu l'adresse IP de la passerelle de sécurité SEGW (930), la station mobile 700 envoie une requête d'établissement d'un tunnel de bout en bout (E2E Tunnel Establishment Request) 820 à la passerelle de sécurité SEGW (930).

Après réception de la requête précitée 820, la passerelle de sécurité SEGW (930) transfert la requête reçue 830 vers la passerelle TTG (920).

La passerelle TTG (920) envoie ensuite au noeud GGSN (960) une requête de création d'informations de contexte relatives à la session de communication (Create PDP Context Request) 840.

Le noeud GGSN (960) crée les informations de contexte précitées et retourne une confirmation de création d'informations de contexte (Create PDP Context Response) 850.

La passerelle TTG (920) transfert la confirmation précitée 860 vers la passerelle de sécurité SEGW (930).

Enfin, la passerelle de sécurité SEGW (930) envoie à la station mobile 700 un message d'acceptation de l'établissement d'un tunnel de bout en bout (E2E Tunnel Establishment Ack) 870.

## Revendications

1. Dispositif de radiocommunication (700) comprenant :
- pour des services circuits, des premiers moyens d'accès, permettant d'accéder à un réseau mobile via un premier réseau d'accès compris dans un réseau local sans fil,
- pour des services paquets, des deuxièmes moyens d'accès (70), permettant d'accéder audit réseau mobile via ledit premier réseau d'accès,
**caractérisé en ce que** lesdits premiers moyens d'accès sont conformes à la technologie « GAN» et lesdits deuxièmes moyens d'accès sont conformes à la technologie « 3GPP-WLAN Interworking », lesdites technologies étant définies dans les normes 3GPP.

2. Dispositif (700) selon la revendication 1, **caractérisé en ce qu'**il comprend en outre:
- pour lesdits services circuits, des troisièmes moyens d'accès, permettant d'accéder audit réseau mobile via un deuxième réseau d'accès compris dans ledit réseau mobile; et
- pour lesdits services paquets, des quatrièmes moyens d'accès (80), permettant d'accéder audit réseau mobile via ledit deuxième réseau d'accès compris dans ledit réseau mobile ;
et **en ce que** lesdits troisièmes moyens d'accès sont conformes à la technologie « GAN » et lesdits quatrièmes moyens d'accès sont conformes a la technologie « 3GPP-WLAN Interworking ».

3. Dispositif (700) selon la revendication 2, **caractérisé en ce qu'**il comprend en outre, pour lesdits services paquets, des moyens de répartition (90) permettant d'affecter des flux PDP (F1 à F4) auxdits deuxièmes (70) ou quatrièmes (80) moyens d'accès.

4. Dispositif (700) selon l'une quelconque des revendications 1 à 3, **caractérisé en ce que** lesdits deuxièmes moyens d'accès (70) comprennent des moyens de contrôle (71) permettant de :
- gérer l'établissement d'un tunnel IPsec (T1 à T4) pour chaque flux PDP (F1 à F4) ; et
- effectuer une mise en correspondance de chaque flux PDP avec un tunnel IPsec.

5. Contrôleur de réseau d'accès (900), permettant à un dispositif de radiocommunication (700);
- pour des services circuits, d'accéder à un réseau mobile via un premier réseau d'accès compris dans un réseau local sans fil,
- pour des services paquets, d'accéder audit réseau mobile via ledit premier réseau d'accès,
**caractérisé en ce que** ledit contrôleur de réseau d'accès (900) comprend :
- un bloc GANC-CS (910) qui correspond à la partie relative aux services circuits d'un contrôleur GANC conforme à la technologie « GAN », permettant de gérer des flux pour les services circuits ;
- une passerelle TTG (920) conforme à la technologie « 3GPP-WLAN Interworking », permettant de gérer des flux pour les services paquets, lesdites technologies étant définies dans les normes 3GPP ; et
- des moyens de répartition (940) permettant d'affecter chaque flux audit bloc GANC-CS ou à ladite passerelle TTG.

6. Contrôleur de réseau d'accès (900) selon la revendication 5, **caractérisé en ce qu'**il comprend en outre une unique passerelle de sécurité SEGW (930) placée en amont dudit bloc GANC-CS (910) et de ladite passerelle TTG (920), côté dispositif de radiocommunication (700).

7. Contrôleur de réseau d'accès (900) selon la revendication 6, **caractérisé en ce que** ladite passerelle de sécurité SEGW (930) comprend lesdits moyens de répartition (940),
